# FASCICULE DE BREVET EUROPEEN

(11) **EP 3 079 891 B1**
(45) Date de publication et mention de la délivrance du brevet: **17.04.2019**
(21) Numéro de dépôt: 14827476.4
(22) Date de dépôt: 08.12.2014
(51) Int. Cl.: B29D 30/06, B29C 33/42

(54) **ENSEMBLE D'ÉLÉMENTS MOULANT DESTINÉ À ÊTRE RAPPORTÉ DANS UN MOULE**
FORMTEIL-ZUSAMMENSTELLUNG FÜR DEN EINSATZ IN EINEM FORMWERKZEUG
MOULDING ELEMENT ASSEMBLY FOR INSERTION INTO A MOULD

(30) Priorité: 12.12.2013 FR 1362452
(43) Date de publication de la demande: 19.10.2016
(73) Titulaire: Compagnie Générale des Etablissements Michelin, 63000 Clermont-Ferrand (FR)
(72) Inventeur: REEB, Alexandre, F-63040 Clermont-Ferrand Cedex 9 (FR); LEBLAY, Damien, F-63040 Clermont-Ferrand Cedex 9 (FR); MONTZIEUX, Stéphane, F-63040 Clermont-Ferrand Cedex 9 (FR)
(74) Mandataire: Roussy, Delphine
(86) Numéro de dépôt international: PCT/FR2014/053217
(87) Numéro de publication internationale: WO 2015/086974

(56) Documents cités:
- EP-A1- 2 072 287
- EP-A1- 2 517 867
- FR-A1- 2 946 915
- JP-A- H0 390 317
- US-A- 6 143 223
- US-A1- 2011 259 487
- US-A1- 2012 161 348
- US-A1- 2013 164 401

## Description

L'invention concerne un ensemble d'éléments moulants formant un réseau d'éléments moulants dans un moule.

### ÉTAT DE LA TECHNIQUE

On connait du document FR2939712 un ensemble d'éléments moulants formant un réseau. Les éléments moulants, ici des cordons ou des lamelles, sont fabriqués d'un seul tenant par frittage laser. Ces éléments moulants permettent de mouler des découpures dans une bande de roulement d'un pneumatique.

Le document WO2010076521 décrit une méthode de fabrication d'une garniture comportant un réseau complexe de lamelle et de cordons, chaque cordon du réseau surmoulant au moins le bord d'une lamelle. Une étape intermédiaire de cette méthode consiste à l'utilisation d'une cire de façon à constituer un réseau intermédiaire de lamelles et de cordons. Cette cire est ensuite évacuée lors d'une étape de chauffe dans une matrice finale.

La demande de brevet JP H03 090317 décrit un ensemble d'éléments moulants selon le préambule de la revendication 1.

Le réseau formé par les éléments moulants peut avoir une taille importante. Dans certaines conditions de fabrication, ce réseau peut être soumis à des déformations non négligeables, ce qui le fait sortir des tolérances de fabrication acceptables. De plus, pour fabriquer un tel réseau, il est nécessaire de prévoir une machine de frittage laser adéquate et plus particulièrement un plateau de réception du réseau de grande dimension. Ce qui augmente les coûts de fabrication. En outre, lorsqu'un élément moulant du réseau est non conforme, c'est tout le réseau qui doit être mis au rebus.

### DOMAINE TECHNIQUE

Il existe donc un besoin de trouver une solution permettant d'obtenir un ensemble d'éléments moulants de bonne tenue mécanique, respectant les tolérances de fabrication et qui soit simple et pratique à fabriquer.

### DÉFINITIONS

Par « pneumatique », on entend tous les types de bandages élastiques soumis à une pression interne ou non.

Par « bande de roulement » d'un pneumatique, on entend une quantité de matériau en caoutchouc délimitée par des surfaces latérales et par deux surfaces principales dont l'une est destinée à entrer en contact avec une chaussée lorsque le pneumatique roule et l'autre est orienté vers l'intérieur du pneu.

Par « découpure dans une bande de roulement » on entend soit une découpure fine également appelée incision, soit une découpure large également appelée rainure.

Par « élément moulant », on entend un élément disposé dans un moule apte à réaliser des découpures dans la bande de roulement d'un pneumatique. Un élément moulant apte à réaliser une incision dans la bande de roulement est appelé une lamelle. Un élément moulant apte à réaliser une rainure dans la bande de roulement est appelé un cordon.

### RÉSUME DE L'INVENTION

L'invention concerne un ensemble d'éléments moulants destiné à être rapporté dans un moule, selon la revendication 1, cet ensemble d'éléments comportant un assemblage d'une pluralité d'éléments moulants. Chaque élément moulant est apte à mouler une découpure dans une bande de roulement d'un pneumatique. Chaque élément moulant comporte un moyen d'assemblage, ce moyen d'assemblage étant apte à lier cet élément moulant avec un autre élément moulant pour former une partie de l'ensemble d'éléments moulants. Chaque élément moulant comportant une paroi latérale, pour tout ou partie des éléments moulants le moyen d'assemblage comprend une fente de réception dans sa paroi latérale, ladite paroi latérale étant destinée à recevoir un autre élément moulant et l'élément moulant est une lamelle.

L'imbrication entre les éléments moulants permet de garantir leur bonne tenue mécanique lors de la cuisson du pneumatique. De plus, l'ensemble d'éléments moulants comportant différents éléments moulants ainsi imbriqués est plus robuste. En outre, les différents éléments moulants peuvent toujours être réalisés par frittage laser, ce qui permet d'obtenir des formes d'éléments moulants très complexes. On notera que l'ensemble d'éléments moulants comportant les éléments assemblés entre eux, peut être directement fixé dans un moule, par exemple, par collage. En variante, les éléments moulants de l'ensemble d'éléments moulants peuvent être « noyés » ensemble dans de l'aluminium, préalablement à la mise en place de l'ensemble d'éléments moulants dans le moule. En outre, la fente de réception est un mode de liaison simple et pratique à réaliser.

Dans une variante de réalisation, la fente de réception est disposée dans une partie faisant protubérance à partir de la paroi latérale de l'élément moulant.

La partie faisant protubérance permet d'améliorer la liaison entre les deux éléments moulants.

Dans une autre variante de réalisation, la fente de réception est inclinée vis-à-vis de la paroi latérale de l'élément moulant.

L'inclinaison de la fente permet d'apporter une inclinaison entre deux éléments moulants imbriqués.

Dans une autre variante de réalisation, l'élément moulant comporte une paroi transversale globalement perpendiculaire à la paroi latérale de cet élément moulant. L'élément moulant comporte un plot et/ou un creux sur cette paroi transversale.

Le plot et/ou le creux permet(tent) de structurer un ensemble d'éléments moulants qui peut être adapté à la taille du moule. En outre, cela permet d'obtenir un ensemble d'éléments moulants plus complexe.

Dans une autre variante de réalisation, la lamelle comporte une surépaisseur et les moyens d'assemblage sont disposés dans cette surépaisseur.

Ceci permet de rendre plus robuste l'assemblage entre les éléments moulants.

Selon l'invention, tout ou partie des éléments moulant de l'ensemble sont des lamelles de type « goutte d'eau » comportant chacune à une de leur extrémité une surépaisseur. Cette surépaisseur comprenant un moyen d'assemblage. L'ensemble d'éléments comprend un assemblage d'au moins deux lamelles de type « goutte d'eau ».

On obtient ainsi un réseau d'éléments moulants complexe et robuste.

### BRÈVE DESCRIPTION DES DESSINS

D'autres caractéristiques et avantages de l'invention ressortiront de la description suivante, donnée à titre d'exemple, sans caractère limitatif, en regard des dessins annexés sur lesquels :
- la figure 1 est une vue en perspective d'un élément moulant selon l'invention,
- la figure 2 est une vue de côté de l'élément moulant de la Fig.1, selon un second mode de réalisation de l'invention,
- la figure 3 est une vue en perspective d'un ensemble d'éléments moulants selon l'invention,
- la figure 4 est une vue en perspective d'un ensemble d'éléments moulants selon un second mode de réalisation de l'invention.

Dans la description qui va suivre, des éléments sensiblement identiques ou similaires seront désignés par des références identiques.

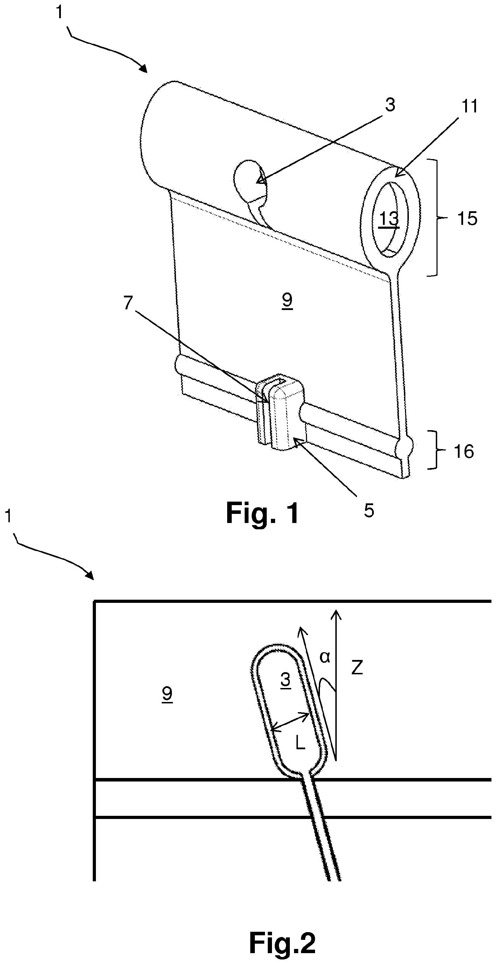

La Fig. 1 présente un élément moulant 1 pour le moulage d'une découpure dans une bande de roulement d'un pneumatique. Cet élément moulant 1 a la forme ici d'une lamelle de type « goutte d'eau » comportant une surépaisseur à une de ses extrémités. Cet élément moulant 1 comporte également une seconde surépaisseur 16, moins large que la première surépaisseur, à sa base. La première surépaisseur et la seconde surépaisseur 16 reçoivent ici des fentes de réception 3, 7 pour recevoir un autre élément moulant. Plus particulièrement, la fente de réception 7 associée à la seconde surépaisseur 16 s'étend dans une partie 5 faisant protubérance à partir d'une paroi latérale 9 de l'élément moulant 1. Les deux fentes de réception 3 et 7 sont alignées.

L'élément moulant 1 comporte également un creux 13 sur une paroi latérale 11. Ce creux 13 est destiné à recevoir un plot d'un autre élément moulant pour l'assemblage des deux éléments moulants.

La Fig.2 présente une variante de réalisation, dans laquelle la fente 3 est inclinée d'un angle α par rapport à une direction verticale Z. Cet angle α est compris entre 5° et 45°. On peut également prévoir que la fente 3 soit inclinée par rapport à une direction normale à la paroi latérale 9 de l'élément moulant 1. Cette inclinaison peut être comprise, par exemple entre 5° et 75°. Dans ce cas la fente de réception 7 de la partie 5 faisant protubérance sera également inclinée de la même inclinaison et alignée avec la fente 3, mais la partie protubérante 5 sera décalée par rapport à la fente 3.

On notera que la largeur L de la fente 3 peut être légèrement supérieure à l'épaisseur de l'élément moulant qui va venir se loger dans cette fente 3, de sorte à permettre un jeu d'assemblage entre les deux éléments moulants.

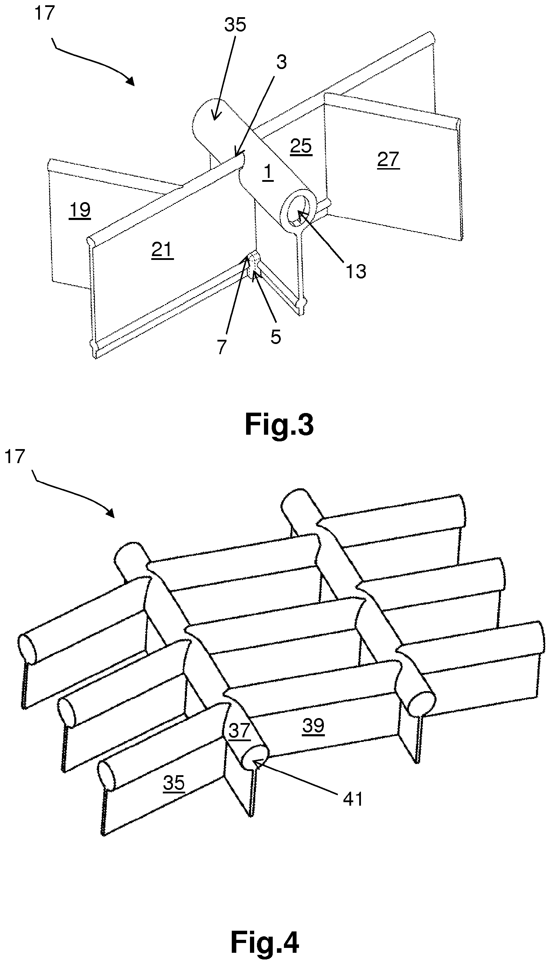

La Fig.3 représente l'élément moulant 1 de la Fig.1 assemblé dans un ensemble d'éléments moulants 17. Plus particulièrement, l'ensemble d'éléments moulants 17 comporte ici plusieurs éléments moulants 1, 19, 21, 25, 27, chaque élément moulant étant apte à mouler une découpure dans la bande de roulement d'un pneumatique.

La Fig. 4 représente un ensemble d'éléments moulants plus complexe comportant une pluralité de lamelles de type « goutte d'eau » 35, 37, 39, comportant chacune à une de leur extrémité une surépaisseur 41. Cette surépaisseur 41 est adaptée pour recevoir des moyens d'assemblage des lamelles de type « goutte d'eau ».

L'invention n'est pas limitée aux exemples décrits et représentés et diverses modifications peuvent y être apportées sans sortir de son cadre.

Ainsi, dans une variante de réalisation, l'élément moulant 1 de la Fig.1 est une cordon.

Les éléments moulants sont fabriqués par frittage laser. En variante, ces éléments moulants sont fabriqués par tout autre procédé de fabrication, tel que la fonderie, l'usinage, etc...

La Fig. 1 présente des fentes localisées sur des parties élargies de l'élément moulant. En variante, une fente peut s'étendre sur une grande hauteur de cet élément moulant. Ceci est notamment intéressant lorsque l'élément moulant ne comporte pas de parties élargies mais est suffisamment épais pour supporter le moyen d'assemblage dans sa hauteur.

## Revendications

1. Ensemble d'éléments moulants destiné à être rapporté dans un moule, cet ensemble d'éléments (17) comportant un assemblage d'une pluralité d'éléments moulants, chaque élément moulant (19, 21, 1, 25, 27) étant apte à mouler une découpure dans une bande de roulement d'un pneumatique, chaque élément moulant (1) comporte un moyen d'assemblage (3, 5, 7), ce moyen d'assemblage (3, 5, 7) étant apte à lier cet élément moulant (1) avec un autre élément moulant (21) pour former une partie de l'ensemble d'éléments moulants (17) et le moyen d'assemblage est disposé au niveau d'une paroi latérale (9) de l'élément moulant (1), ce moyen d'assemblage comprenant une fente de réception (3, 7) destinée à recevoir l'autre élément moulant (21) et l'élément moulant (1) étant une lamelle,**caractérisé en ce que** tout ou partie des éléments moulant (35, 37, 39) de l'ensemble sont des lamelles de type « goutte d'eau » comportant chacune à une de leur extrémité une surépaisseur (41), cette surépaisseur (41) comprenant un moyen d'assemblage et **en ce que** l'ensemble d'éléments comprend un assemblage d'au moins deux lamelles (35, 37, 39) de type « goutte d'eau ».

2. Ensemble selon la revendication 1, **caractérisé en ce que** la fente de réception (7) est disposée dans une partie faisant protubérance (5) à partir de la paroi latérale (9) de l'élément moulant.

3. Ensemble selon l'une des revendications précédentes, **caractérisé en ce que** la fente de réception (3,7) est inclinée vis-à-vis de la paroi latérale (9) de l'élément moulant (1).

4. Ensemble selon l'une quelconque des revendications précédentes, **caractérisé en ce que** l'élément moulant (1) comporte une paroi transversale (11) globalement perpendiculaire à la paroi latérale (9) de cet élément moulant, l'élément moulant comportant un plot et/ou un creux (13) sur sa paroi transversale (11).

5. Ensemble selon la revendication précédente, **caractérisé en ce que** la lamelle comporte une surépaisseur (15) et **en ce que** les moyens d'assemblage (3) sont disposés dans cette surépaisseur (15).

## Patentansprüche

1. Anordnung von formgebenden Elementen, die dazu bestimmt ist, in ein Formwerkzeug eingesetzt zu werden, wobei diese Anordnung von Elementen (17) einen Verbund von mehreren formgebenden Elementen aufweist, wobei jedes formgebende Element (19, 21, 1, 25, 27) dafür ausgelegt ist, einen Einschnitt in einem Laufstreifen eines Reifens zu formen, wobei jedes formgebende Element (1) ein Verbindungsmittel (3, 5, 7) aufweist, wobei dieses Verbindungsmittel (3, 5, 7) dafür ausgelegt ist, dieses formgebende Element (1) mit einem anderen formgebenden Element (21) zu verbinden, um einen Teil der Anordnung von formgebenden Elementen (17) zu bilden, und das Verbindungsmittel an einer Seitenwand (9) des formgebenden Elements (1) angeordnet ist, wobei dieses Verbindungsmittel einen Aufnahmeschlitz (3, 7) umfasst, der dazu bestimmt ist, das andere formgebenden Element (21) aufzunehmen, und wobei das formgebende Element (1) eine Lamelle ist, **dadurch gekennzeichnet, dass** alle formgebenden Elemente (35, 37, 39) oder ein Teil davon Wassertropfenlamellen sind, die jeweils an einem ihrer Enden eine Verdickung (41) aufweisen, wobei diese Verdickung (41) ein Verbindungsmittel umfasst, und dadurch, dass die Anordnung von Elementen einen Verbund von wenigstens zwei Wassertropfenlamellen (35, 37, 39) umfasst.

2. Anordnung nach Anspruch 1, **dadurch gekennzeichnet, dass** der Aufnahmeschlitz (7) in einem Teil ausgebildet ist, der einen von der Seitenwand (9) des formgebenden Elements ausgehenden Vorsprung (5) bildet.

3. Anordnung nach einem der vorhergehenden Ansprüche, **dadurch gekennzeichnet, dass** der Aufnahmeschlitz (3, 7) gegenüber der Seitenwand (9) des formgebenden Elements (1) geneigt ist.

4. Anordnung nach einem der vorhergehenden Ansprüche, **dadurch gekennzeichnet, dass** das formgebende Element (1) eine Querwand (11) aufweist, die im Wesentlichen senkrecht zur Seitenwand (9) dieses formgebenden Elements ist, wobei das formgebende Element einen Höcker und/oder eine Ausnehmung (13) auf seiner Querwand (11) aufweist.

5. Anordnung nach dem vorhergehenden Anspruch, **dadurch gekennzeichnet, dass** die Lamelle eine Verdickung (15) aufweist, und dadurch, dass die Verbindungsmittel (3) in dieser Verdickung (15) angeordnet sind.

## Claims

1. Set of moulding elements intended to be attached inside a mould, this set of elements (17) comprising an assembly of a plurality of moulding elements, each moulding element (19, 21, 1, 25, 27) being able to mould a cut in a tread of a tyre, each moulding element (1) comprises an assembly means (3, 5, 7), this assembly means (3, 5, 7) being able to connect this moulding element (1) to another moulding element (21) to form part of the set of moulding elements (17), and the assembly means being situated along a lateral wall (9) of the molding element (1), said assembly means comprising a receiving slot (3, 7) intended to receive the other moulding element (21) and the molding element (1) being a lamella, **characterized in that** all or some of the moulding elements (35, 37, 39) of the set are blades of the "teardrop" type each comprising an additional thickness (41) at one of their ends, this additional thickness (41) comprising an assembly means, and **in that** the set of elements comprises an assembly of at least two "teardrop" type blades (35, 37, 39).

2. Set according to Claim 1, **characterized in that** the receiving slot (7) is arranged in a part (5) that protrudes from the lateral wall (9) of the moulding element.

3. Set according to any of the preceding claims, **characterized in that** the receiving slot (3, 7) is inclined with respect to the lateral wall (9) of the moulding element (1) .

4. Set according to any of the preceding claims, **characterized in that** the moulding element (1) comprises a transverse wall (11) roughly perpendicular to the lateral wall (9) of this moulding element, the moulding element comprising a stud and/or a hollow (13) on its transverse wall (11).

5. Set according to any of the preceding claims, **characterized in that** the blade has an additional thickness (15) and **in that** the assembly means (3) are arranged in this additional thickness (15).
